# EUROPÄISCHE PATENTANMELDUNG

(11) **EP 3 210 863 A1**
(43) Veröffentlichungstag der Anmeldung: **30.08.2017**
(21) Anmeldenummer: 16157644.2
(22) Anmeldetag: 26.02.2016
(51) Int. Cl.: B62D 33/04

(54) **BAUSATZ UND VERFAHREN ZUM BAU EINES KOFFERAUFBAUS FÜR EIN NUTZFAHRZEUG SOWIE NUTZFAHRZEUG**

(71) Anmelder: Schmitz Cargobull AG, 48341 Altenberge (DE)
(72) Erfinder: Dorr, Christoph, 46514 Schermbeck (DE); Sundermann, Karin, 48703 Stadtlohn (DE); Westhoff, Ludger, 46354 Südlohn (DE); Beelmann, Reinhard, 45721 Haltern am See (DE); Goeckede, Christoph, 48231 Warendorf (DE)
(74) Vertreter: Cohausz & Florack

(57) **Zusammenfassung**

Die Erfindung betrifft einen Bausatz zum Bau eines Kofferaufbaus (K) für ein Nutzfahrzeug (N), wobei der Bausatz (1) Wandelemente (2,3,4) und ein Dachelement (5) sowie Verbindungselemente (18,19,32) umfasst, die zum Verbinden der nach der Montage des Bausatzes (1) in den Eckbereichen (10-17) des Kofferaufbaus (K) aneinander stoßenden Wand- (2,3,4) und Dachelemente (5) vorgesehen sind. Ebenso betrifft die Erfindung ein Nutzfahrzeug, das mit einem solchen Kofferaufbau ausgestattet ist und ein Verfahren zu seiner Herstellung. Der erfindungsgemäße Bausatz erlaubt es, auf einfache und zeitsparende Weise den Kofferaufbau zu montieren. Hierzu sind erfindungsgemäß die Verbindungselemente (18,19,32) fest und unlösbar an den ihnen zugeordneten Randbereichen der Wandelemente (2,3,4) und des Dachelements (5) angeordnet, wobei die bei der Montage des Kofferaufbaus (K) aufeinander treffenden Verbindungselemente (18,19,32) nach Art von Nut-Feder-Verbindungen korrespondierend zueinander so ausgebildet sind, dass die jeweils aufeinander treffenden Verbindungselemente (18,19,32) bei der Montage des Kofferaufbaus (K) in einer Fügezone ineinander greifen, um eine Verbindung der Wand- (2,3,4) oder Dachelemente (5) zu bewirken, die ausschließlich durch einen in die Fügezone eingebrachten Klebstoff unterstützt ist.

## Beschreibung

Die Erfindung betrifft einen Bausatz zum Bau eines Kofferaufbaus für ein Nutzfahrzeug, wobei der Bausatz Wandelemente und ein Dachelement sowie Verbindungselemente umfasst, die zum Verbinden der nach der Montage des Bausatzes in den Eckbereichen des Kofferaufbaus aneinander stoßenden Wand- und Dachelemente vorgesehen sind.

Des Weiteren betrifft die Erfindung ein Nutzfahrzeug mit einem Kofferaufbau, der aus einem derartigen Bausatz hergestellt ist.

Schließlich betrifft die Erfindung auch ein Verfahren zur Herstellung eines Nutzfahrzeugs der hier in Rede stehenden Art.

Nutzfahrzeuge mit Kofferaufbauten werden in unterschiedlichen Nutzgewichtsklassen eingesetzt. Neben den üblicherweise zum Transport von temperaturempfindlichem Gut eingesetzten Aufliegern für Sattelzüge werden so genannte "Kleinlastwagen" in der Gewichtsklasse 2,8 - 7,5 Tonnen, insbesondere 2,8 - 6 Tonnen, mit Kofferaufbauten im städtischen oder regionalen Lieferverkehr eingesetzt. Der Kofferaufbau dient hier in der Regel nicht dem Schutz der zu transportierenden Ware gegen Temperaturschwankungen, wie beispielsweise zur Isolierung von Tiefkühlware gegenüber der Umgebung, sondern soll vorrangig das Transportgut gegen die Witterung, Beschädigung oder Diebstahl schützen.

Die Basis für mit Kofferaufbauten bestückte Kleinlastwagen und desgleichen bilden typischerweise von Nutzfahrzeugherstellern in Serie gefertigte Fahrgestelle. Auf deren Chassis werden üblicherweise in handwerklicher Fertigung von in der Regel lokalen Karosseriebaubetrieben die Kofferaufbauten montiert.

Um den Aufwand für die Versorgung mit den für die Herstellung von Kofferaufbauten benötigten Teilen zu minimieren, ist es bekannt, die betreffenden Teile zu Bausätzen zusammenzustellen. Derartige Bausätze können von hierauf spezialisierten Herstellbetrieben im großtechnischen Rahmen mit optimierter Qualität kostengünstig hergestellt werden.

Aus der EP 0 607 575 A1 ist ein Bausatz zur Herstellung eines Kofferaufbaues, insbesondere für Lastkraftfahrzeuge, wie Anhänger, Sattelauflieger oder dergleichen, in Klebetechnik und ein Verfahren zur Herstellung eines derartigen Kofferaufbaues bekannt. Dabei sollen Probleme beim Transport und der Handhabung eines derartigen Bausatzes dadurch umgangen werden können, dass die Wandelemente für die Wände und Decken des Aufbaus eine maximale Breite von etwa 1,5 m und die Bodenwandelemente eine maximale Breite von etwa 1,5 m aufweisen. Darüber hinaus soll der Bausatz Einfassprofile zur Klebeverbindung der aus den Wand- bzw. Boden- und Deckenwandelementen gebildeten Wand-, Decken- oder Bodeneinheit umfassen. Bei der Montage des Bausatzes zu dem jeweiligen Kofferaufbau werden die Wand-, Decken- oder Bodeneinheiten zunächst aus den kleinteiligen Wand-, Decken- oder Bodenelementen zusammengesetzt und anschließend mittels der Einfassprofile miteinander verbunden, die dazu an die jeweils miteinander zu verbindenden Baueinheiten angelegt und mit ihnen verklebt oder vernietet werden.

Aus der EP 2 263 931 A2 ist des Weiteren eine Anordnung zur Errichtung von Fahrzeugaufbauten und ein Fahrzeug mit einem Chassis und einer darauf angeordneten derartigen Anordnung bekannt. Die Anordnung wird aus einer Mehrzahl von Baugruppen gebildet und kann wenigstens Baugruppen für Seitenwandelemente und ein mit den Seitenwandelementen zu verbindendes Dachelement aufweisen. Ferner ist in der Regel wenigstens ein Verschlusselement, wie eine Türe, vorgesehen, welches im zusammengesetzten Zustand der Anordnung in einen Laderaumbereich aufgenommen werden kann. Die das Verschlusselement tragende Struktur kann dabei Teil der Baugruppe für die Seitenwandelemente, Teil der Baugruppe für das Dachelement, Teil einer zusätzlichen Baugruppe für ein mit den Seitenwandelementen oder mit einem Stirnwandelement zu verbindenden Bodenelement oder Teil eines Fahrzeugchassis sein.

Vor dem Hintergrund des Standes der Technik bestand die Aufgabe darin, einen Bausatz zu schaffen, mit dem sich auf einfache und zeitsparende Weise ein Kofferaufbau für ein Nutzfahrzeug montieren lässt.

Darüber hinaus sollte ein Nutzfahrzeug angegeben werden, das sich kostengünstig und zeitsparend mit einem Kofferaufbau ausstatten lässt.

Schließlich sollte ein Verfahren zur Montage eines Kofferaufbaus auf einem Nutzfahrzeug genannt werden.

In Bezug auf den Bausatz hat die Erfindung diese Aufgabe dadurch gelöst, dass ein solcher Bausatz gemäß Anspruch 1 ausgebildet ist.

Ein die voranstehend genannte Aufgabe erfindungsgemäß lösendes Nutzfahrzeug ist in Anspruch 13 angegeben.

In Bezug auf das Verfahren hat die Erfindung die oben genannte Aufgabe dadurch gelöst, dass bei einem solchen Verfahren mindestens die in Anspruch 14 angegebenen Verfahrensschritte durchgeführt werden.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Bausatz zum Bau eines Kofferaufbaus für ein Nutzfahrzeug umfasst demnach in Übereinstimmung mit dem Stand der Technik Wandelemente und ein Dachelement sowie insbesondere profilartig ausgebildete Verbindungselemente, die zum Verbinden der nach der Montage des Bausatzes in den Eckbereichen des Kofferaufbaus aneinander stoßenden Wand- und Dachelemente vorgesehen sind.

Erfindungsgemäß sind nun bei einem solchen Bausatz die Verbindungselemente fest und unlösbar an den ihnen zugeordneten Randbereichen der Wandelemente und des Dachelements angeordnet.

Gleichzeitig sind die bei der Montage des Kofferaufbaus aufeinander treffenden Verbindungselemente nach Art von Nut-Feder-Verbindungen korrespondierend zueinander ausgebildet, so dass die jeweils aufeinander treffenden Verbindungselemente bei der Montage des Kofferaufbaus in einer Fügezone ineinander greifen, um eine Verbindung der Wand- oder Dachelemente zu bewirken, die ausschließlich durch einen in die Fügezone eingebrachten Klebstoff unterstützt ist.

Anders als bei dem eingangs erläuterten Stand der Technik sind bei einem erfindungsgemäßen Bausatz die Verbindungselemente somit bereits fester Bestandteil der Wand- oder Dachelemente. Die Wandelemente oder das Dachelement werden daher als Baueinheit mit den Verbindungselementen konvektioniert und ausgeliefert, wobei das jeweilige Wand- oder Deckenelement mit den ihm zugeordneten Verbindungselementen eine unlösbare Einheit bildet.

Die Verbindungselemente erstrecken sich dabei jeweils längs der Ränder des jeweiligen Wand- oder Deckenelements, an denen das betreffende Wand- oder Deckenelement beim Zusammenbau des Kofferaufbaus auf ein weiteres Wand- oder Deckenelement trifft. Zu einem solchen Zusammentreffen kommt es in den in der Regel vertikal verlaufenden Wandeckbereichen, in denen jeweils Wandelemente miteinander verbunden sind, und in den in der Regel horizontal verlaufenden Dacheckbereichen, in denen das jeweilige Dachelement des Kofferaufbaus mit den das Dachelement tragenden Wandelementen verbunden ist.

Jede Verbindung zwischen zwei aneinander stoßenden Wand- oder Deckenelementen besteht erfindungsgemäß aus zwei Verbindungselementen, von denen das eine Teil des einen Elements und das andere Teil des anderen Elements ist. Die Wand- und Deckenelemente des erfindungsgemäßen Bausatzes sind somit zumindest an den Seiten, an denen eine Verkopplung mit einem jeweils angrenzenden Element vorgesehen ist, von jeweils einem Verbindungselement eingefasst.

Dies hat den Vorteil, dass zwischen den miteinander zu verbindenden Wand- oder Deckenelementen eine geometrisch eindeutig definierte, durch die miteinander in Eingriff kommenden Verbindungselemente geschaffene Fügezone vorliegt. Dabei können die Verbindungselemente nach dem Vorbild der Nut-Feder-Verbindung problemlos so ausgelegt werden, dass sie die korrespondierend zueinander geformten Fügepartner "selbst finden". Auf diese Weise ist der Aufwand für das Ausrichten und Halten der Wand- und Dachelemente eines erfindungsgemäßen Bausatzes trotz der Größe dieser Elemente auf ein Minimum reduziert. Spezielle Ausrichtarbeiten, wie sie insbesondere bei einem nachträglichen Anbringen von Halteprofilen und desgleichen erforderlich sind, fallen beim erfindungsgemäßen Bausatz nicht an, da die Verbindungselemente bereits Teil der jeweiligen Wand- und Dachelemente sind.

Aufgrund dessen, dass die die jeweilige Verbindung zwischen zwei aufeinander treffenden Wand- oder Deckenelementen bildenden Verbindungelemente über eine gewisse Tiefe ineinandergreifen, können die mit ihnen ausgestatteten Wand- oder Dachelemente im Rahmen dieser Überlappungstiefe gegeneinander verschoben werden, ohne dass es dadurch zu Instabilitäten oder Undichtheiten des Aufbaus kommt. Auf diese Weise können bei einem erfindungsgemäßen Aufbau problemlos Montage-, Lage- oder Fertigungstoleranzen ausgeglichen werden.

Letzteres gilt insbesondere auch deshalb, weil beim erfindungsgemäßen Bausatz die im jeweiligen Eckbereich einander begegnenden Verbindungselemente der Wand- und Dachelemente zwar ineinander greifen, die Verbindung der Verbindungselemente jedoch an erster Stelle durch eine Klebeverbindung und nicht durch ein bestimmtes form- oder kraftschlüssiges Zusammenwirken der Verbindungselemente bewirkt wird.

Der Auftrag und die Verteilung des erforderlichen Klebstoffs werden bei einem erfindungsgemäßen Bausatz dadurch besonders einfach, dass jeweils eines der sich in der Fügezone der jeweiligen Verbindung begegnenden Verbindungselemente eine nut- oder schlitzartige Aufnahme aufweist, in die das andere Verbindungselement greift. Dies erlaubt es, den Klebstoff entweder in diese Aufnahme oder auf dem in sie greifenden Verbindungselement so aufzubringen, dass es im Zuge des Fügevorgangs zwangsläufig zu einer gleichmäßigen Verteilung des Klebstoffs in den dazu im Bereich der Fügezone vorgesehenen Fugen kommt.

Nicht notwendig, jedoch vorteilhafterweise, kann die Klebeverbindung durch eine mit dem Einschieben des einen Verbindungselements in das andere Verbindungselement entstehenden kraftschlüssigen oder formschlüssigen Verbindung der beiden Verbindungselemente unterstützt werden. Dies kann beispielsweise dadurch erzielt werden, dass die Aufnahme des einen Verbindungselements einen Rastabschnitt aufweist, mit dem beim Einschieben des anderen Verbindungselements ein an diesem Verbindungselement ausgebildeter Rastabschnitt verrastet.

Ein erfindungsgemäßer Bausatz erlaubt es somit, mit wenigen Handgriffen und ohne besonderes Werkzeug einen Kofferaufbau zusammenzusetzen. Die dazu erforderlichen Arbeiten erfordern keine Spezialkenntnisse, so dass sie auch von ungeübteren Personen erledigt werden können.

So kann beim erfindungsgemäßen Verfahren zum Herstellen eines in erfindungsgemäßer Weise mit einem Kofferaufbau auf Basis eines erfindungsgemäßen Bausatzes ausgestatteten Nutzfahrzeugs, das ein Chassis aufweist, das den Kofferaufbau trägt, wie folgt vorgegangen werden:
a) Bereitstellen eines erfindungsgemäß ausgebildeten Bausatzes;
b) Montage des ersten Wandelements auf dem Chassis;
c) Ausbringen von Klebstoff in oder an das Verbindungselement eines weiteren zu montierenden Wandelements oder in oder an das Verbindungselement des zuvor montierten Wandelements;
d) Montage des weiteren Wandelements unter Fügen und Verkleben der Verbindungselemente, die im jeweiligen Wandeckbereich zwischen dem weiteren Wandelement und dem zuvor montierten Wandelement aufeinander treffen;
e) sukzessives Wiederholen der Arbeitsschritte c) und d), bis alle Wandelemente des Bausatzes montiert sind;
f) Ausbringen von Klebstoff in oder an die jeweils dem Dachelement zugeordneten Verbindungselement der Wandelemente oder in oder an die Verbindungselemente des Dachelements;
g) Aufsetzen des Dachelements unter Fügen und Verkleben der in den Dacheckbereichen zwischen den Wandelementen und dem Dachelement aufeinander treffenden Verbindungselemente;
h) optionales Abdichten der Eckbereiche, in denen das Dachelement und die Wandelemente mit ihren Verbindungselementen aufeinander treffen.

Ein erfindungsgemäßes Nutzfahrzeug weist dementsprechend einen Kofferaufbau auf, der aus einem erfindungsgemäßen Bausatz montiert ist, wobei mindestens die Wandelemente und das Dachelement ausschließlich durch die ineinander greifenden Verbindungselemente und eine jeweils im Bereich der durch die Verbindungselemente hergestellten Verbindung erzeugte Verklebung miteinander verbunden sind.

Typischerweise weisen Kofferaufbauten der hier in Rede stehenden Art eine Quaderform auf. Soll ein solcher Aufbau mit einem erfindungsgemäßen Bausatz montiert werden können, so umfasst dieser Bausatz zwei der Längsseite des Nutzfahrzeugs zugeordnete Seitenwandelemente, ein der Fahrerkabine des Nutzfahrzeugs zugeordnetes Stirnwandelement, dessen Verbindungselemente bei fertig montiertem Kofferaufbau in jeweils einem Wandeckbereich mit einem Verbindungselement jeweils eines der Stirnwandelemente zusammentrifft, und ein Dachelement, dessen Verbindungselemente bei fertig montiertem Kofferaufbau in jeweils einem Dacheckbereich mit den dort jeweils angeordneten Verbindungselementen der jeweiligen Seitenwandelemente und des Stirnwandelements zusammentreffen.

Abhängig von der Art und Weise, wie der Zugang zu dem vom jeweiligen Kofferaufbau umschlossenen Laderaum ermöglicht werden soll, kann selbstverständlich in einem oder mehreren der Wandelemente eines erfindungsgemäßen Bausatzes eine konventionelle Zugangseinrichtung, wie Tür, Rolltor oder desgleichen, vorgesehen sein. In diesem Fall kann es zudem zweckmäßig sein, wenn der jeweilige Bausatz so viele in erfindungsgemäßer Weise ausgebildete Wandelemente umfasst, dass beim Zusammenbau ein den jeweiligen Laderaum vollständig umschließender Aufbau entsteht.

Für viele Anwendungsfälle wird jedoch an einer der Wände, üblicherweise der bezogen auf die normale Vorwärtsfahrrichtung des Nutzfahrzeugs rückwärtigen Wand, eine maximal große, verschließbare Öffnung gewünscht, um den Laderaum möglichst ungehindert be- und entladen zu können. Bei einem erfindungsgemäßen Bausatz kann dies auf einfache und gleichzeitig den aus dem Bausatz gebauten Kofferaufbau optimal stabilisierende Weise dadurch bewerkstelligt werden, wenn beim fertigen Kofferaufbau zwei beabstandet zueinander angeordnete Wandelemente seitlich und das Dachelement dachseitig eine Zugangsöffnung zu dem von dem Kofferaufbau umschlossenen Laderaum begrenzen, dass diese Wandelemente und das Dachelement an derjenigen ihrer Seiten, die der Zugangsöffnung zugeordnet ist, jeweils ein Rahmenteil tragen und dass die an den Wandelementen und dem Dachelement befestigten Rahmenteile beim fertig montierten Kofferaufbau einen Rahmen bilden, an dem eine Türeinrichtung befestigbar ist, um einen öffen- und verschließbaren Zugang zu dem vom fertigen Kofferaufbau umgebenen Laderaum zu ermöglichen.

Eine besonders stabile und gleichzeitig einfach zu montierende Ausgestaltung des Kofferaufbaus ergibt sich dabei dann, wenn bereits beim erfindungsgemäß bereitgestellten Bausatz das am Dachelement befestigte Rahmenteil an seinen freien Enden jeweils ein von dem Dachelement in Querrichtung zum Dachelement abstehendes Verstärkungselement aufweist, das bei der Montage des Kofferaufbaus in eine korrespondierend geformte Aufnahme greift, die am Rahmenteil des jeweils zugeordneten Wandelements ausgebildet ist. Auch das Verstärkungselement und die jeweils zugeordnete Aufnahme am Rahmenteil des Wandelements können dabei selbstverständlich in an sich bekannter Weise so ausgebildet sein, dass sie sich beim Aufsetzen des Dachs auf das jeweilige Wandelement selbst finden. Hierzu kann das Verstärkungselement nach Art eines Schwerts und die Aufnahme korrespondierend dazu nach Art eines Schafts ausgebildet sein, so dass es durch das Einführen des Verstärkungselements in die Aufnahme zu einer selbsttätigen lagerichtigen Ausrichtung des Dachelements in Bezug auf das jeweilige Wandelement kommt.

Die Wandelemente und das Dachelement können in an sich ebenfalls bekannter Weise als Sandwichkonstruktion ausgebildet sein, bei der eine aus einem Kunststoffschaum bestehende Kernlage an ihren Außenseiten mit jeweils mindestens einer dünnen Lage eines formsteifen Materials, wie beispielsweise einem Blech, das aus einem Stahl- oder Aluminiumwerkstoff besteht, oder einer Lage eines formfesten, beispielsweise faserverstärkten Kunststoffmaterials, belegt ist. Selbstverständlich können die jeweiligen Außenlagen auch als Funktionsschichten gebildet sein, um beispielsweise eine bestimmte Dampf- oder Gasdurchlässigkeit zu unterbinden oder eine maximierte Beulsteifigkeit der jeweiligen Wand zu gewährleisten. Das Dachelement kann alternativ zumindest abschnittsweise aus einem transparenten Material bestehen, um Tageslicht für die Beleuchtung des Laderaums zu ermöglichen. Selbstverständlich können in die Wand- oder Deckenelemente des erfindungsgemäßen Bausatzes in ebenso an sich bekannter Weise auch Fenster- oder Belüftungseinrichtungen eingebracht sein. Erweist sich die Fertigung von einstückigen, großflächigen Dach- oder Wandelementen als zu aufwändig, so können die Wandelemente oder das Dachelement auch aus zwei oder mehr separat voneinander vorgefertigten Paneelen zusammengesetzt sein. Hierzu steht im Stand der Technik eine große Zahl von Beispielen zur Verfügung.

Wie schon erwähnt, kann es zweckmäßig sein, die für die dauerhafte Verbindung der Bauteile des aus einem erfindungsgemäßen Bausatz zusammenzusetzenden Kofferaufbaus vorgesehene Klebeverbindung durch eine form- oder kraftschlüssig wirkende, durch die jeweils zusammenwirkenden Verbindungselemente selbst bewerkstelligte Verbindung zu unterstützen. Hierzu können von den bei der Montage des Kofferaufbaus jeweils aufeinander treffenden Verbindungselementen das erste Verbindungselement einen mit einem Rastabschnitt versehenen Vorsprung und das zweite Verbindungselement eine Aufnahme aufweisen, in die der Vorsprung des ersten Verbindungselements bei der Montage des Kofferaufbaus greift und in der ebenfalls ein Rastabschnitt vorgesehen ist, mit dem der Rastabschnitt des Vorsprungs des ersten Verbindungselements, wenn er in die Aufnahme des zweiten Verbindungselements eingeschoben ist, formschlüssig und verliersicher verrastet ist.

Für ein einfaches Einbringen und ein ordnungsgemäßes selbsttätiges Verteilen des Klebstoffs in der jeweiligen Fügezone der durch zwei zusammenwirkende Verbindungselemente hergestellten Verbindung kann es zweckmäßig sein, wenn bei mindestens einem der zusammenwirkenden Verbindungselemente eine Aufnahme für einen vor der Montage des Kofferaufbaus eingebrachten Klebstoffvorrat vorgesehen ist.

Abhängig von der Art und Ausstattung des Fahrgestells, auf dem aus einem erfindungsgemäßen Bausatz ein Kofferaufbau errichtet werden soll, kann es zweckmäßig sein, wenn der Bausatz nicht nur Wandelemente und ein Dachelement, sondern auch ein Bodenelement umfasst. Dabei sind mindestens an den den Wandelementen zugeordneten Randbereichen des Bodenelements oder an den betreffenden Wandelementen Verbindungselemente befestigt, die korrespondierend zum jeweils bei der Montage des Kofferaufbaus auf sie treffenden Randbereich der Wandelemente oder des Bodens ausgebildet sind. Auch in diesem Fall vom erfindungsgemäßen Bausatz umfasste Bodenelemente und die mit ihm zusammentreffenden Wandelemente sind somit so ausgebildet, dass die Verbindung mit dem jeweils an dem Bodenelement abgestützten Wandelement über ein am Bodenelement oder jeweiligen Wandelement bereits fest vorgesehenes Verbindungselement erfolgt. Auch hier sind folglich keine aufwändigen Montagearbeiten erforderlich. Vielmehr wird auch die Verbindung zwischen Bodenelement und jeweiligem Wandelement erfindungsgemäß so bewerkstelligt, dass ein Verkleben und ein optional zusätzliches form- oder kraftschlüssiges Zusammenwirken der in der jeweiligen Fügezone aufeinander treffenden Bauelemente für eine sichere und stabile Verbindung ausreicht.

Aus Montagesicht günstig ist es, wenn die jeweiligen Verbindungselemente des Bodenelements, sofern vorhanden, mindestens an den seitlichen, den Wandelementen zugeordneten Bereichen des Bodens befestigt sind. Sie können dabei so ausgebildet sein, dass die mit ihnen verbundenen Wandelemente auf ihnen stehen, die Verbindungselemente des Bodens somit das jeweilige Wandelement tragen. Optional können dann zusätzlich die jeweiligen Wandelemente an ihrer dem Boden zugeordneten Seite ebenfalls mit jeweils einem fest angebundenen Verbindungselement versehen sein, das mit dem Verbindungselement des Bodens zusammenwirkt. Auch hier kann es dabei zweckmäßig sein, wenn die jeweils am Bodenelement oder am zugeordneten Wandelement vorhandenen und mit dem Bodenelement zusammenwirkenden Verbindungselemente jeweils eine Aufnahme, beispielsweise in Form einer Rinne, zum Einbringen von Klebstoff für die Klebeverbindung zwischen dem Bodenelement und dem jeweiligen Wandelement umfassen.

Im Fall, dass das Dachelement und zwei Wandelemente des aus einem erfindungsgemäßen Bausatz zu montierenden Kofferaufbaus eine Zugangsöffnung begrenzen und dazu Rahmenteile besitzen, die gemeinsam einen die Zugangsöffnung umgebenden Rahmen bilden, und wenn der Bausatz zusätzlich ein Bodenelement umfasst, kann es zweckmäßig sein, wenn das Bodenelement an der Seite, die der Zugangsöffnung zugeordnet ist, ebenfalls ein Rahmenteil trägt, das gemeinsam mit den Rahmenteilen des Dachelements und der Seitenwandelemente den Rahmen bildet. Dabei kann zur Unterstützung der Stabilität des Rahmens und des gesamten aus dem Bausatz gebildeten Kofferaufbaus das am Bodenelement befestigte Rahmenteil an seinen freien Enden jeweils ein von dem Bodenelement in Querrichtung zum Bodenelement abstehendes Verstärkungselement aufweisen, das bei der Montage des Kofferaufbaus in eine korrespondierend geformte Aufnahme greift, die am Rahmenteil des jeweils zugeordneten Seitenwandelements ausgebildet ist.

Nachfolgend wird die Erfindung anhand einer ein Ausführungsbeispiel darstellenden Zeichnung näher erläutert. Deren Figuren zeigen jeweils schematisch:

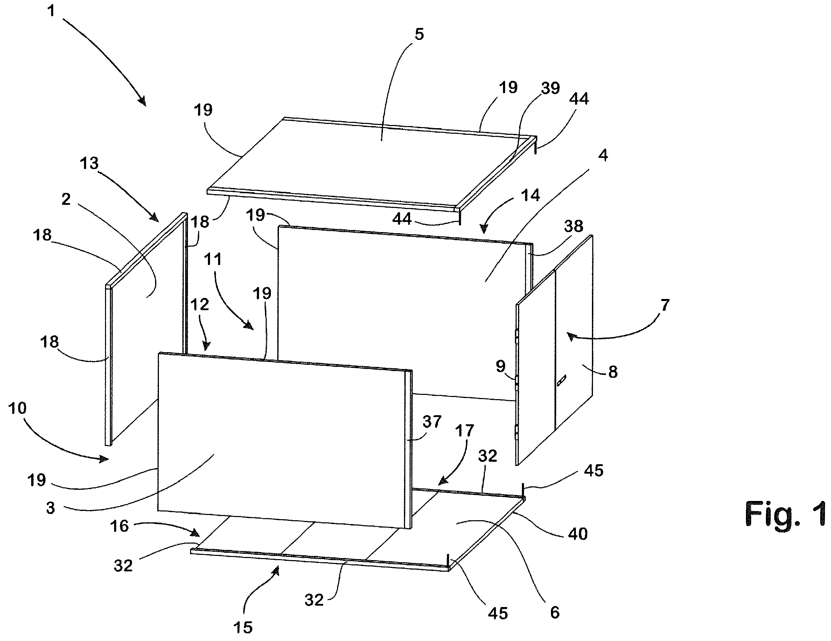

- Fig. 1: die Bauelemente eines Bausatzes für einen Kofferaufbau in perspektivischer Darstellung;
- Fig. 2: eine Verbindung zwischen einem Dach- und einem Wandelement des Kofferaufbaus in einem Vertikalschnitt;
- Fig. 3: eine Verbindung zwischen einem Bodenelement und einem Wandelement des Kofferaufbaus in einem Vertikalschnitt;
- Fig. 4: eine Verbindung zwischen einem Rahmenteil eines Dachelements und einem Rahmenteil eines Wandelements des Kofferaufbaus in einem Vertikalschnitt;
- Fig. 5: eine Verbindung zwischen einem Rahmenteil des Bodenelements und einem Rahmenteil eines Wandelements des Kofferaufbaus in einem Vertikalschnitt;
- Fig. 6 - 11: ein Nutzfahrzeug in unterschiedlichen Stadien der Montage eines Kofferaufbaus aus einem Bausatz der in Fig. 1 dargestellten Art in perspektivischer Ansicht;
- Fig. 12: das Nutzfahrzeug gemäß Fig. 6 - 11 mit fertig aufgebautem Kofferaufbau.

Der Bausatz 1 für einen quaderförmigen Kofferaufbau K eines Nutzfahrzeugs N umfasst ein Stirnwandelement 2, zwei Seitenwandelemente 3,4, ein Dachelement 5 und ein Bodenelement 6.

Zusätzlich umfasst der Bausatz eine Türeinrichtung 7, die als eigene Untergruppe des Bausatzes unter anderem eine doppelflügelige Türe 8 mit zugehörigem Verschlussmechanismus und Scharnieren 9 umfasst.

Das Stirnwandelement 2 ist der in normaler Vorwärtsfahrtrichtung V des Nutzfahrzeugs N gesehen vorderen Seite des Kofferaufbaus K zugeordnet, während die Seitenwandelemente 3,4 jeweils einer der Längsseiten L1 ,L2 des Nutzfahrzeugs N zugeordnet sind. Dementsprechend treffen das Stirnwandelement 2 und die Seitenwandelemente 3,4 beim fertig montierten Kofferaufbau K in jeweils einem Wandeckbereich 10,11 aufeinander.

Das Dachelement 5 wird beim fertigen Kofferaufbau K vom Stirnwandelement 2 und den Seitenwandelementen 3,4 getragen. Es trifft dementsprechend mit den Seitenwandelementen 3,4 und dem Stirnwandelement 2 jeweils in einem Dacheckbereich 12,13,14 zusammen.

Gleichzeitig sind beim fertigen Kofferaufbau K die Seitenwandelemente 3,4 und das Stirnwandelement 2 in jeweils einem Bodeneckbereich 15,16,17 an der ihnen jeweils zugeordneten Seite des Bodenelements 6 abgestützt.

Jedes der Stirnwand- 2, Seitenwand- 3,4 und Dachelemente 5 trägt an denjenigen seiner Seiten, die einem der Wand- 10,11, Dach- 12,13,14 oder Bodeneckbereichen 15,16,17 zugeordnet ist, jeweils ein Verbindungselement 18,19.

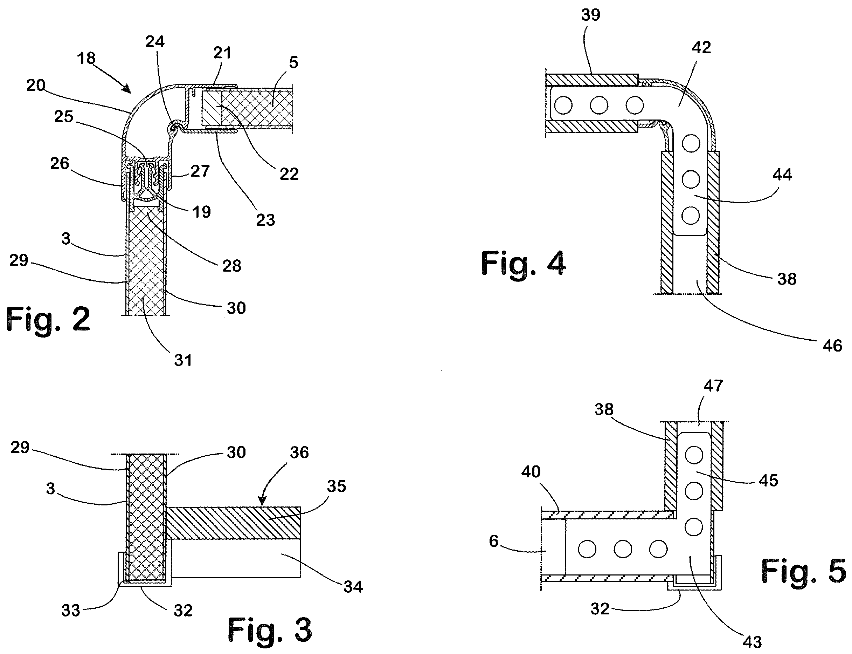

Die Verbindungselemente 18,19 sind in Fig. 2 beispielhaft für die Verbindung zwischen dem Dachelement 5 und dem Seitenwandelement 3 gezeigt. Das Verbindungselement 18 umfasst dabei einen aus einem Aluminiumwerkstoff extrudierten Profilkörper 20, der im Querschnitt betrachtet einen Viertelkreis beschreibt und an seiner dem Dachelement 5 zugeordneten Seite eine Leiste 21 besitzt, die auf der Oberseite des dem Verbindungselement 18 zugeordneten oberen Seite des Randbereichs 22 des Dachelements 5 verklebt ist. An der Unterseite des Randbereichs 22 liegt als weiterer Bestandteil des Verbindungselements 18 ein leistenartiges Scharnierteil 23 an, das mit seinem vom Dachelement 5 abgewandten Rand in einer am Profilkörper 20 ausgebildeten Scharnieraufnahme 24 schwenkbar gelagert ist. Auf diese Weise kann das Scharnierteil 23, nachdem der Profilkörper 20 durch Verkleben der Leiste 21 mit dem Dachelement 5 befestigt worden ist, auf seiner dem Dachelement 5 zugewandten Seite ebenfalls mit Klebstoff belegt und gegen die zugeordnete Unterseite des Randbereichs 22 des Dachelements 5 geschwenkt werden, um auch hier eine Fixierung des Verbindungselements 18 am Dachelement 5 durch Verkleben zu bewerkstelligen.

An seiner dem Seitenwandelement 3 zugeordneten Seite weist der Profilkörper 20 eine nutartige Aufnahme 25 auf, die seitlich durch jeweils eine an den Profilkörper angeformte Leiste 26,27 begrenzt ist. Die Leisten 26,27 sind so beabstandet, dass das Seitenwandelement 3 mit dem ihm zugeordneten Verbindungselement 19 in die Aufnahme 25 eingeschoben werden kann und die Leisten 26,27 an der jeweils zugeordneten Außenfläche des ihnen zugeordneten Randbereichs 28 des Seitenwandelements 3 anliegen. Sie liegen dabei auf der Außenseite jeweils einer aus einem formfesten Material bestehenden Außenlage 29,30 des Seitenwandelements 3, das als Sandwich mit einer zwischen den Außenlagen 29,30 angeordneten, aus einem geschäumten Kunststoff bestehenden Kernlage 31 ausgebildet ist. In entsprechender Weise ist das Dachelement 5 aufgebaut, wobei hier zumindest abschnittsweise auch ein transparentes, lichtdurchlässiges Material verwendet werden kann, um Lichteinfall von der Umgebung in den vom Kofferaufbau K umgrenzten Laderaum R zu ermöglichen.

Im Randbereich 28 ist an Stelle der Kernlage 31 das Verbindungselement 19 angeordnet, das an seinen Außenseiten jeweils von einer der Außenlagen 29,30 abgedeckt ist, mit der es fest verklebt ist. Das Verbindungselement 19 weist Vorsprünge mit Rastabschnitten auf, die beim Einführen des Verbindungselements 19 in die am Verbindungselement 18 ausgebildete, dem Seitenwandelement 3 zugeordnete Aufnahme 25 des Verbindungselements 18 mit dort vorhandenen Rastvorsprüngen verrasten und so eine form- und kraftschlüssige Verbindung der Verbindungselemente 18,19 bewirken. Dabei erfolgt die dauerhaft feste und unlösbare Verbindung der Verbindungselemente 18,19 jedoch durch eine Verklebung mittels Klebstoff, der vor dem Einführen des Verbindungselements 19 in die Aufnahme 25 des Verbindungselements 18 gefüllt wird und sich beim Einführen des Verbindungselements 19 so in den Fugen der dadurch entstehenden Fügezone verteilt, dass eine intensive stoffschlüssige Verklammerung der Verbindungselemente 18,19 gewährleistet ist.

Beim Bausatz 1 ist am Stirnwandelement 2 an dessen den Wandelementen 3,4 und dem Dachelement 5 zugeordneten Seiten jeweils in der voranstehend beschriebenen Weise ein Verbindungselement 18 angeordnet, das sich über die gesamte Höhe der jeweiligen Seite erstreckt.

In den dem Stirnwandelement 2 und dem Dachelement 5 zugeordneten Randbereichen der Seitenwandelemente 3,4 ist dagegen in der voranstehend erläuterten Weise jeweils ein Verbindungselement 19 eingelassen, das sich über die Höhe bzw. Länge der jeweiligen Seite der Seitenwandelemente 3,4 erstreckt.

An den den Seitenwandelementen 3,4 zugeordneten Seiten des Dachelements 5 ist dementsprechend jeweils ein Verbindungselement 18 befestigt, das sich über die gesamte Länge des Dachelements 5 erstreckt. Dagegen ist an der dem Stirnwandelement 2 zugeordneten Seite des Dachelements 5 ein Verbindungselement 19 befestigt.

Die Details des Aufbaus des Stirnwandelements 2, der Seitenwandelemente 3,4 und des Dachelements 5 sowie der jeweils durch die Verbindungselemente 18,19 geschaffenen Verbindungen sind in den Europäischen Patentanmeldungen EP 16157609.5, EP 16157610.3 und EP 16157611.1 vom 26. Februar 2016 beschrieben, deren Inhalt hiermit zum Zwecke der Erläuterung durch Bezugnahme in die vorliegende Anmeldung einbezogen werden.

Für die Anbindung der Seitenwandelemente 3,4 und des Stirnwandelements 2 an das Bodenelement 6 sind seitlich an dem Bodenelement 6 befestigte, sich über die Länge der jeweiligen Seite des Bodenelements 6 erstreckende schienenartige Verbindungselemente 32 befestigt, die jeweils eine nutförmige Aufnahme 33 begrenzen. Die Aufnahme 33 ist dabei so bemessen, dass das jeweilige Seitenwandelement 3,4 und Stirnwandelement 2 zur Montage des Kofferaufbaus K mit seinem dem Bodenelement 6 zugeordneten Randbereich in die Aufnahme 33 gesetzt werden kann und den dort zuvor eingefüllten Klebstoff so verdrängt, dass er die zwischen den Innenflächen des Verbindungselements 32 vorhandenen Fugen füllt und so für eine sichere Verklebung sorgt. Das Bodenelement 6 umfasst dabei eine durch Quer- und Längsträger gebildete Tragstruktur 34, auf der eine aus einem Holzwerkstoff gebildete Decklage 35 aufliegt. An der Oberseite der Decklage 35 ist die Ladefläche 36 gebildet, auf der im Gebrauch des Nutzfahrzeugs N das hier nicht dargestellte Transportgut steht.

An denjenigen Seiten der Seitenwandelemente 3,4, die der dem Stirnwandelement 2 zugeordneten Seite gegenüberliegen und beim fertigen Kofferaufbau K der Rückseite RS des Kofferaufbaus K zugeordnet sind, ist jeweils ein ebenfalls profilartiges, aus einem Stahl- oder Aluminiumwerkstoff bestehendes Rahmenteil 37,38 befestigt. Die Rahmenteile 37,38 sind für eine Befestigung der Scharniere 9 der Türeinrichtung 7 vorgerichtet und erstrecken sich jeweils im Wesentlichen über die gesamte Höhe der Seitenteile 3,4.

Genauso ist an der der Rückseite RS zugeordneten Seite des Dachelements 5 und des Bodenelements 6 jeweils ein Rahmenteil 39,40 befestigt. Die Rahmenteile 39,40 sind dabei so vorgerichtet, dass sie als Anschläge für den Schließmechanismus der Türeinrichtung 7 dienen und mit den Rahmenteilen 37,38 der Seitenwandelemente 3,4 beim fertigen Kofferaufbau K einen Rahmen 41 bilden, an dem die Türeinrichtung 7 sicher gehalten ist. Zudem trägt der Rahmen 41 zur Stabilität des aus dem Bausatz 1 gebildeten Kofferaufbaus K bei.

Hierzu tragen die Rahmenteile 39,40 des Dachelements 5 und des Bodenelements 6 an ihren freien Enden jeweils ein Verstärkungselement 42,43. Die Verstärkungselemente 42,43 sind nach Art von Winkelstücken ausgebildet, deren Schenkel rechtwinklig zueinander ausgerichtet sind. Der eine Schenkel der Verstärkungselemente 42,43 steckt dabei im jeweiligen Rahmenteil 39,40 des Dachelements 5 oder des Bodenelements 6 und ist dort jeweils fest gehalten. Dagegen steht der andere Schenkel 44 der dem Dachelement zugeordneten Verstärkungselemente 42 vom Dachelement 5 in Richtung des Bodenelements 6 und der andere Schenkel 45 der jeweils dem Bodenelement 6 zugeordneten Verstärkungselemente 43 vom Bodenelement 6 in Richtung des Dachelements 5 ab. Den abstehenden Schenkeln 44,45 ist jeweils eine Aufnahme 46,47 in den ihnen zugeordneten Endabschnitten der Rahmenteile 39,40 der Seitenwände 3,4 zugeordnet.

Beim Zusammenbau des Kofferaufbaus K werden die abstehenden Schenkel 44,45 in die ihnen zugeordneten Aufnahmen 46,47 nach Art eines Schwerts eingeführt. Die Verstärkungselemente 43 des Bodenelements 6 bilden so einen Anschlag für die ordnungsgemäße Ausrichtung des jeweiligen Seitenwandelements 3,4 in Bezug auf die Rückseite RS des Kofferaufbaus K. Maß- oder Lagetoleranzen zwischen der Position des Stirnwandelements 2 und den Seitenwandelementen 3,4 werden dabei über die Verbindungen in den Wandeckbereichen 10,11 ausgeglichen. In entsprechender Weise erfolgt die Ausrichtung des Dachelements 5 über die ihm zugeordneten Verstärkungselemente 42.

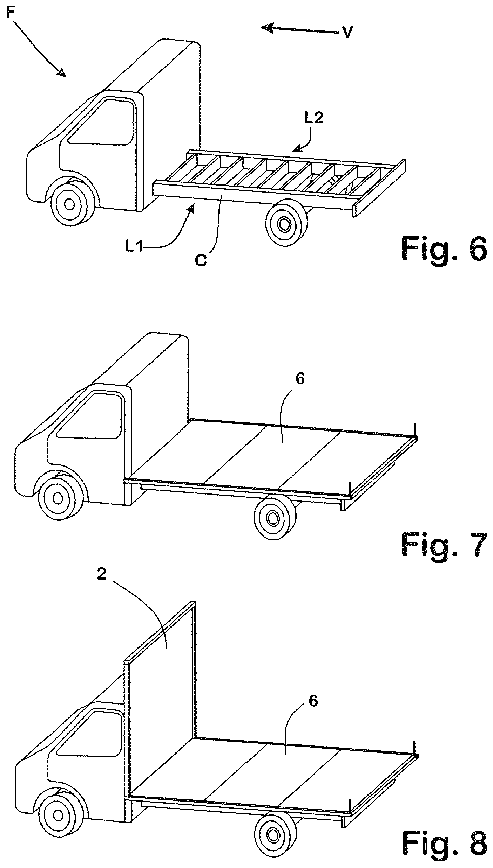

Für die Montage des Kofferaufbaus K wird ein handelsübliches Fahrgestell F eines Nutzfahrzeugs N zur Verfügung gestellt, bei dem es sich beispielsweise um ein Nutzfahrzeug der 2 - 6 Tonnen Klasse handelt. Das Fahrgestell F umfasst einen Vorderwagen mit dem Antriebsmotor und Antriebsstrangs des Nutzfahrzeugs N, sowie einen Hinterwagen mit einem Chassis C, auf der der Kofferaufbau K zu errichten ist und an dem die Antriebsachse des Nutzfahrzeugs N mit den Hinterrädern gelagert ist. Das Chassis C ist in üblicherweise durch zwei parallel zueinander angeordnete, sich in Längsrichtung des Nutzfahrzeugs N erstreckende Längsträger mit dazwischen angeordneten Querträgern gebildet (Fig. 6).

Im ersten Montageschritt wird das Bodenelement 6 auf dem Chassis C befestigt (Fig. 7). Hierzu können Konsolen eingesetzt werden, über die das Bodenelement 6 mit den Langträgern oder den Querträgern des Chassis C verschraubt wird.

Dann wird das Stirnwandelement 2 montiert. Dazu wird in die Aufnahme 33 des dem Stirnwandelement 2 zugeordneten Verbindungselements 32 des Bodenelements 6 Klebstoff gefüllt und das Stirnwandelement 2 mit seinem dem Verbindungselement 32 zugeordneten unteren Randbereich in die Aufnahme 33 gesetzt (Fig. 8).

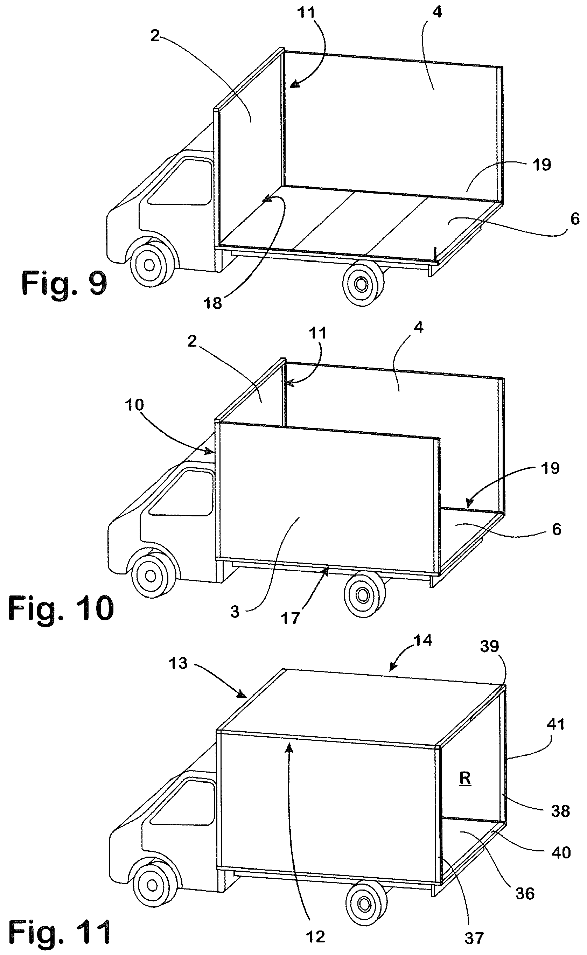

Anschließend werden die Seitenwandelemente 3,4 montiert. Hierzu wird in die Aufnahmen 25 der Verbindungselemente 19 des Stirnwandelements 2 und in die Aufnahmen 33 der den Seitenwandelementen 3,4 zugeordneten Verbindungselemente 32 des Bodenelements 6 Klebstoff gefüllt. Anschließend werden die Seitenwandelemente 3,4 so positioniert, dass der jeweilige Schenkel 45 der Verstärkungselemente 43 in die zugeordnete Aufnahme 47 der Rahmenteile 37,38 der Seitenwandelemente 3,4 greift (Fig. 9).

Nun wird nach Auftrag von Klebstoff in die entsprechenden Aufnahmen 25 der Verbindungselemente 18 des Dachelements 5 das Dachelement 5 auf die Wandelemente 3,4 und das Stirnwandelement 2 aufgesetzt, wobei auch hier die Lagegenauigkeit der Positionierung dadurch bewerkstelligt wird, dass die abstehenden Schenkel 44 der dem Dachelement 5 zugeordneten Verstärkungselemente 42 in die ihnen zugeordneten Aufnahmen 46 der Rahmenteile 37,38 der Seitenwandteile 3,4 greifen (Fig. 10).

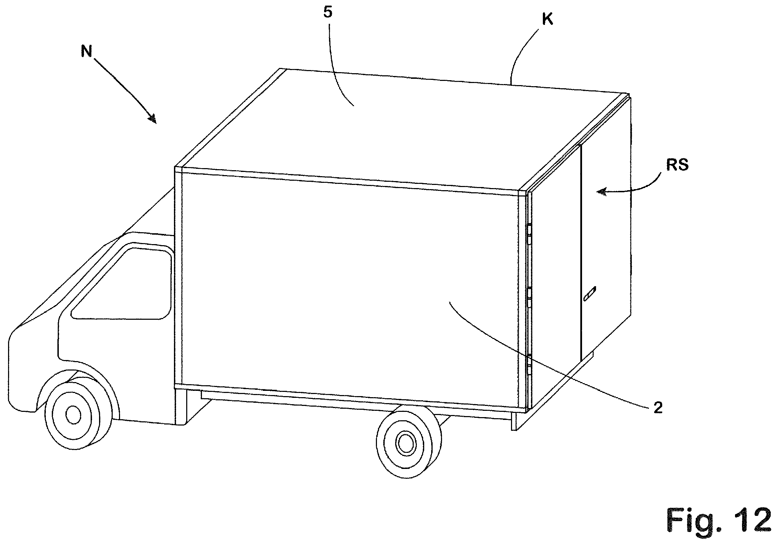

Schließlich wird noch die Türeinrichtung 7 montiert, indem die Scharniere 9 der Türen 8 an den dafür vorgerichteten Positionen des durch Rahmenteile 37 - 40 gebildeten (Rückwand-)Rahmens 41 des Kofferaufbaus K befestigt werden (Fig. 12).

### BEZUGSZEICHEN

- 1: Bausatz für einen quaderförmigen Kofferaufbau K eines Nutzfahrzeugs N
- 2: Stirnwandelement
- 3,4: Seitenwandelemente
- 5: Dachelement
- 6: Bodenelement
- 7: Türeinrichtung
- 8: Türe
- 9: Scharniere
- 10,11: Wandeckbereiche des Kofferaufbaus K
- 12-14: Dacheckbereiche des Kofferaufbaus K
- 15-17: Bodeneckbereiche des Kofferaufbaus K
- 18,19: Verbindungselemente
- 20: Profilkörper
- 21: Leiste
- 22: Randbereich des Dachelements 5
- 23: Scharnierteil
- 24: Scharnieraufnahme
- 25: Aufnahme
- 26,27: Leisten
- 28: Randbereich des Seitenwandelements 3
- 29,30: Außenlage des Seitenwandelements 3
- 31: Kernlage
- 32: Verbindungselemente
- 33: nutförmige Aufnahme
- 34: Tragstruktur
- 35: Decklage
- 36: Ladefläche
- 37-40: Rahmenteile
- 41: Rahmen
- 42,43: Verstärkungselemente
- 44: abstehender Schenkel der Verstärkungselemente 42
- 45: abstehender Schenkel der Verstärkungselemente 43
- 46,47: Aufnahmen der Rahmenteile 39,40

- C: Chassis
- F: Fahrgestell
- K: Kofferaufbau
- L1,L2: Längsseiten des Nutzfahrzeugs N
- N: Nutzfahrzeug
- R: Laderaum
- RS: Rückseite des Kofferaufbaus K
- V: Vorwärtsfahrtrichtung

## Patentansprüche

1. Bausatz zum Bau eines Kofferaufbaus (K) für ein Nutzfahrzeug (N), wobei der Bausatz (1) Wandelemente (2,3,4) und ein Dachelement (5) sowie Verbindungselemente (18,19,32) umfasst, die zum Verbinden der nach der Montage des Bausatzes (1) in den Eckbereichen (10-17) des Kofferaufbaus (K) aneinander stoßenden Wand- (2,3,4) und Dachelemente (5) vorgesehensind, **dadurch gekennzeichnet, dass** die Verbindungselemente (18,19,32) fest und unlösbar an den ihnen zugeordneten Randbereichen der Wandelemente (2,3,4) und des Dachelements (5) angeordnet sind und dass die bei der Montage des Kofferaufbaus (K) aufeinander treffenden Verbindungselemente (18,19,32) nach Art von Nut-Feder-Verbindungen korrespondierend zueinander ausgebildet sind, so dass die jeweils aufeinander treffenden Verbindungselemente (18,19,32) bei der Montage des Kofferaufbaus (K) in einer Fügezone ineinander greifen, um eine Verbindung der Wand- (2,3,4) oder Dachelemente (5) zu bewirken, die ausschließlich durch einen in die Fügezone eingebrachten Klebstoff unterstützt ist.

2. Bausatz nach Anspruch 1, **dadurch gekennzeichnet, dass** er zwei der Längsseite (L1,L2) des Nutzfahrzeugs (N) zugeordnete Seitenwandelemente (3,4), ein der Fahrerkabine des Nutzfahrzeugs (N) zugeordnetes Stirnwandelement (2), dessen Verbindungselemente (18) bei fertig montiertem Kofferaufbau (K) in jeweils einem Wandeckbereich (10,11) mit einem Verbindungselement (19) jeweils eines der Seitenwandelemente (3,4) zusammentrifft, und ein Dachelement (5) umfasst, dessen Verbindungselemente (18,19) bei fertig montiertem Kofferaufbau in jeweils einem Dacheckbereich (12,13,14) mit den dort jeweils angeordneten Verbindungselementen (19,18) der jeweiligen Seitenwandelemente (3,4) und des Stirnwandelements (2) zusammentreffen.

3. Bausatz nach einem der voranstehenden Ansprüche, **dadurch gekennzeichnet, dass** beim fertigen Kofferaufbau (K) zwei beabstandet zueinander angeordnete Wandelemente (3,4) seitlich und das Dachelement (5) dachseitig eine Zugangsöffnung zu dem von dem Kofferaufbau (K) umschlossenen Laderaum (R) begrenzen, dass diese Wandelemente (3,4) und das Dachelement (5) an derjenigen ihrer Seiten, die der Zugangsöffnung zugeordnet ist, jeweils ein Rahmenteil (37-39) tragen und dass die an den Wandelementen (3,4) und dem Dachelement (5) befestigten Rahmenteile (37-39) beim fertig montierten Kofferaufbau (K) einen Rahmen (41) bilden, an dem eine Türeinrichtung (7) befestigbar ist, um einen öffen- und verschließbaren Zugang zu dem vom fertigen Kofferaufbau (K) umgebenen Laderaum (R) zu ermöglichen.

4. Bausatz nach Anspruch 3, **dadurch gekennzeichnet, dass** das am Dachelement (5) befestigte Rahmenteil an seinen freien Enden jeweils ein von dem Dachelement (5) in Querrichtung zum Dachelement (5) abstehendes Verstärkungselement (42) aufweist, das bei der Montage des Kofferaufbaus (K) in eine korrespondierend geformte Aufnahme (46) greift, die am Rahmenteil (37,38) des jeweils zugeordneten Wandelements (3,4) ausgebildet ist.

5. Bausatz nach einem der voranstehenden Ansprüche, **dadurch gekennzeichnet, dass** die Wandelemente (3,4) oder das Dachelement (5) aus vorgefertigten und miteinander fest verbundenen Paneelen zusammengesetzt sind.

6. Bausatz nach einem der voranstehenden Ansprüche, **dadurch gekennzeichnet, dass** von den bei der Montage des Kofferaufbaus (K) jeweils aufeinander treffenden Verbindungselementen (18,19) das erste Verbindungselement (19) einen mit einem Rastabschnitt versehenen Vorsprung und das zweite Verbindungselement (18) eine Aufnahme (25) aufweist, in die der Vorsprung des ersten Verbindungselements (19) bei der Montage des Kofferaufbaus (K) greift und in der ebenfalls ein Rastabschnitt vorgesehen ist, mit dem der Rastabschnitt des Vorsprungs des ersten Verbindungselements (19), wenn er in die Aufnahme (25) des zweiten Verbindungselements (18) eingeschoben ist, formschlüssig und verliersicher verrastet ist.

7. Bausatz nach einem der voranstehenden Ansprüche, **dadurch gekennzeichnet, dass** mindestens eines der Verbindungselemente (18,19) eine Aufnahme (25) für einen vor der Montage des Kofferaufbaus (K) eingebrachten Klebstoffvorrat umfasst.

8. Bausatz nach einem der voranstehenden Ansprüche, **dadurch gekennzeichnet, dass** er ein Bodenelement (6) umfasst und dass an den den Wandelementen (3,4) zugeordneten Randbereichen des Bodenelements (6) oder den dem Bodenelement (6) zugeordneten Randbereichen der Wandelemente (3,4) Verbindungselemente (32) befestigt sind, die, wenn das Bodenelement (6) die Verbindungselemente (32) besitzt, korrespondierend zum jeweils bei der Montage des Kofferaufbaus (K) auf sie treffenden Randbereich des jeweiligen Wandelements (3,4) oder, wenn die Wandelemente (3,4) die Verbindungselemente besitzen, korrespondierend zum jeweils zugeordneten Randbereich des Bodenelements (6) ausgebildet sind.

9. Bausatz nach Anspruch 3 und 8, **dadurch gekennzeichnet, dass** das Bodenelement (6) an der Seite, die der Zugangsöffnung zugeordnet ist, ebenfalls ein Rahmenteil (40) trägt, das gemeinsam mit den Rahmenteilen (37-39) des Dachelements (5) und der Wandelemente (3,4) den Rahmen (41) bildet.

10. Bausatz nach Anspruch 9, **dadurch gekennzeichnet, dass** das am Bodenelement (6) befestigte Rahmenteil (40) an seinen freien Enden jeweils ein von dem Bodenelement (6) in Querrichtung zum Bodenelement (6) abstehendes Verstärkungselement (43) aufweist, das bei der Montage des Kofferaufbaus (K) in eine korrespondierend geformte Aufnahme (47) greift, die am Rahmenteil (37,38) des jeweils zugeordneten Wandelements (3,4) ausgebildet ist.

11. Bausatz nach einem der Ansprüche 8 bis 10, **dadurch gekennzeichnet, dass** die am Bodenelement (6) befestigten Verbindungselemente (32) beim fertig montierten Kofferaufbau (K) das jeweils ihnen zugeordnete Wandelement (3,4) tragen.

12. Bausatz nach einem der Ansprüche 8 bis 11, **dadurch gekennzeichnet, dass** die am Bodenelement (6) befestigten Verbindungselemente (32) nach Art von Rinnen ausgebildet sind, die dazu vorgesehen sind, vor der Montage des Kofferaufbaus (K) einen Klebstoffvorrat aufzunehmen.

13. Nutzfahrzeug mit einem Kofferaufbau (K), der aus einem gemäß einem der voranstehenden Ansprüche ausgebildeten Bausatz (1) montiert ist, wobei mindestens die Wandelemente (3,4) und das Dachelement (5) ausschließlich durch die ineinander greifenden Verbindungselemente (18,19) und eine jeweils im Bereich der durch die Verbindungselemente (18,19) hergestellten Verbindung erzeugte Verklebung miteinander verbunden sind.

14. Verfahren zum Herstellen eines Nutzfahrzeugs (N) gemäß Anspruch 13, wobei das Nutzfahrzeug (N) ein Chassis (C) aufweist, das den Kofferaufbau (K) trägt, umfassend folgende Arbeitsschritte:
a) Bereitstellen eines gemäß einem der Ansprüche 1-12 ausgebildeten Bausatzes (1);
b) Montage des ersten Wandelements (2) auf dem Chassis (C);
c) Ausbringen von Klebstoff in oder an das Verbindungselement (18,19) eines weiteren zu montierenden Wandelements (3,4) oder in oder an das Verbindungselement (18,19) des zuvor montierten Wandelements (2);
d) Montage des weiteren Wandelements (3,4) unter Fügen und Verkleben der Verbindungselemente (18,19), die im jeweiligen Wandeckbereich (10,11) zwischen dem weiteren Wandelement (3,4) und dem zuvor montierten Wandelement (2) aufeinander treffen;
e) sukzessives Wiederholen der Arbeitsschritte c) und d), bis alle Wandelemente (3,4) des Bausatzes (1) montiert sind;
f) Ausbringen von Klebstoff in oder an die jeweils dem Dachelement (5) zugeordneten Verbindungselemente (18,19) der Wandelemente (3,4) oder in oder an die Verbindungselemente (18,19) des Dachelements (5);
g) Aufsetzen des Dachelements (5) unter Fügen und Verkleben der in den Dacheckbereichen (12,13,14) zwischen den Wandelementen (2,3,4) und dem Dachelement (5) aufeinander treffenden Verbindungselemente (18,19);
h) optionales Abdichten der Eckbereiche, in denen das Dachelement (5), und die Wandelemente (3,4) mit ihren Verbindungselementen (18,19) aufeinander treffen.

15. Verfahren nach Anspruch 14, **dadurch gekennzeichnet, dass** der Bausatz gemäß Anspruch 3 oder 9 ausgebildet ist und nach der gemäß Anspruch 14 durchgeführten Montage des Kofferaufbaus (K) eine Türeinrichtung (7) an dem durch die Rahmenteile (37-40) gebildeten Rahmen (41) montiert wird.
